Europäisches Patentamt

European Patent Office

Office européen des brevets

(19)

(11) Veröffentlichungsnummer: **0 136 257**
**B2**

## (12) NEUE EUROPÄISCHE PATENTSCHRIFT

(45) Veröffentlichungstag der neuen Patentschrift:
**02.01.91**

(21) Anmeldenummer: **84810356.0**

(22) Anmeldetag: **20.07.84**

(51) Int. Cl.⁵: $C\ 08\ K\ 7/18$, $C\ 08\ K\ 9/06$, $C\ 01\ B\ 33/12$

(54) **Kugelförmiger amorpher Quarz und dessen Verwendung in Füllstoffen und Harz-Zusammensetzungen.**

(30) Priorität: **26.07.83 GB 8320086**

(43) Veröffentlichungstag der Anmeldung:
**03.04.85 Patentblatt 85/14**

(45) Bekanntmachung des Hinweises auf die
Patenterteilung:
**20.01.88 Patenblatt 88/03**

(45) Bekanntmachung des Hinweises auf die
Entscheidung über den Einspruch:
**02.01.91 Patentblatt 91/01**

(84) Benannte Vertragsstaaten:
**CH DE FR GB IT LI NL SE**

(56) Entgegenhaltungen:

| EP-A- 62 806 | JP-A-58 138 740 |
|---|---|
| EP-A-0 121 396 | NL-A-6 901 148 |
| DE-A-2 337 336 | NL-A-7 506 347 |
| DE-A-2 721 294 | NL-A-7 706 153 |
| DE-A-2 836 057 | US-A-3 658 750 |
| GB-A- 956 363 | US-A-3 769 126 |
| JP-A-58 015 260 | US-A-4 042 550 |
| JP-A-58 017 161 | US-A-4 238 641 |

SPE Journal Sept. 1964 vol. 25 . 38-43

Die Akte enthält technische Angaben, die nach
dem Eingang der Anmeldung eingereicht
wurden und die nicht in dieser Patentschrift
enthalten sind.

(73) Patentinhaber: **CIBA-GEIGY AG**
**Klybeckstrasse 141**
**CH-4002 Basel (CH)**

(72) Erfinder: **Anzai, Keni**
**2-12, Sumiyoshidai Higashi Nada-ku**
**Kobe-shi Hyogo (JP)**
Erfinder: **Hamabe, Tatsuo**
**13-1403, No. 7 Shinmori-1-chome Asahi-ku**
**Osaka (JP)**

(74) Vertreter: **Zumstein, Fritz, Dr. et al**
**Zumstein & Klingseisen Patentanwälte**
**Bräuhausstrasse 4**
**D-8000 München 2 (DE)**

EP 0 136 257 B2

# EP 0 136 257 B2

## Beschreibung

Gegenstand der vorliegenden Erfindung sind durch Flammspritzen heistellbarer, kugelförmiger amorpher Quarz mit einem durchschnittlichen Teilchendurchmesser von 10 bis 50 µm und einer Teilchengrösse-Verteilung von 1-100 µm im Durchmesser wobei die Oberfläche des kugelförmigen amorphen Quarzes mit einem Silankupplungsmittel behandelt sein kann erfindungsgemässen kugelförmigen amorphen Quarz enthaltende Füllstoffe für Harze sowie Harz-Zusammensetzungen, welche als hauptsächlichen Füllstoff erfindundsgemässen kugelförmigen amorphen Quarz enthalten.

Kristalline oder amorphe Quarzpulver haben eine breite Anwendung als Füllstoffe gefunden und sind dazu geeignet, den Wärmeausdehnungskoeffizienten zu verringern, die thermische Leitfähigkeit zu erhöhen, die Rissfestidkeit der gehärteten Produkte zu verbessern und die Reaktionswärme von Epoxidharzen und anderen Harz-Stoffgemischen herabzusetzen. Diese Pulver sind jedoch als Füllstoffe für Formmassen mit guter Verarbeitbarkeit, die Produkte hoher Qualität mit ausreichenden mechanischen und elektrischen Eigenschaften ergeben, noch nicht ganz zufriedenstellend.

Bekannte anorganische kugelförmide Füllstoffe, wie Glaskügelchen, ergeben keine ausreichenden mechanischen Eigenschaften. Kugelformiges Aluminiumoxid andererseits eignet sich nicht zur Herstellung von homogenen Produkten, da es wegen seines hohen spezifischen Gewichts in den gehärteten Harzprodukten zur Sedimentation neigt. Diese beiden bekannten kugelförmigen Füllstoffe sind somit nicht frei von gewissen Nachteilen, und es bestand daher ein Bedürfnis nach verbesserten Füllstoffen.

Es wurde in der DE—A—28 36 057 vorgeschlagen, wärmehärtbaren Pressmassen zur Verbesserung ihrer elektrischen und mechanischen Eigenschaften Füllstoffgemische beizugeben, wobei einer der Füllstoffe ein kugelförmiger anorganischer Füllstoff mit einer durchschnittlichen Teilchengrösse von 1 bis 800 Nanometer ist.

In der nicht vorpublizierten EP—A—121 396 (Artikel 54(3) EPUe) werden Füllstoffe beschrieben, welche sich vor allem durch ihr geringes Gewicht auszeichnen, wie hohle Glaskugeln, Flugasche oder Siliziumdioxid-Sinterpulver. Diese eignen sich für die Ausrüstung von Energie absorbierenden Polyurethan-Zusammensetzungen.

Der hier und im folgenden verwendeten Ausdruck "Verformen" umfasst beliebige Arten der Kunststoffverarbeitung, wie Giessen, Umhüllen (Einbetten) und Pressen. Besonders bevorzugt ist die Verarbeitung mittels Giessen. Es wurde gefunden, dass Harz-Zusammensetzungen, welche durch Flammspritzen herstellbaren kugelförmigen amorphen Quarz mit einem durchschnittlichen Teilchendurchmesser von 10—50 µm und einer Teilchengrösse-Verteilung von 1—100 µm im Durchmesser enthalten, gegenüber kristallines oder nichtkristallines Quarzpulver enthaltenden Zusammensetzungen dank ihrer niedrigen Viskosität eine wesentlich verbesserte Fliessfähigkeit und ausgezeichnete Entgasungseigehschaften aufweisen. Die aus den genannten neuen Harz-Zusammensetzungen erhaltenen gehärteten Produkte sind von einheitlicher Qualität und weisen ausgezeichnete elektrische und mechanische Eigenschaften auf.

Der durchschnittliche Teilchendurchmesser des erfindungsgemässen kugelformigen amorphen Quarzes kann innerhalb der angegebenen Grenzen je nach beabsichtigter Anwendung, den damit zu füllenden Harzen, den herzustellenden Formkörpern, den angewendeten Verarbeitungsmethoden und dergleichen variieren. Die Verwendung von kugelförmigem amorphen Quarz mit extrem kleinem Teilchendurchmesser würde die Verarbeitbarkeit von solchen kugelförmigen amorphen Quarz als Hauptbestandteil enthaltenden Harz-Zusammensetzungen beeinträchtigen, weil dadurch die Viskosität so starkt erhöht wird, dass die Verarbeitung unter hohem Druck erfolgen muss. Extrem grosse Teilchendurchmesser würden andererseits ein Sedimentieren des kugelförmigen amorphen Quarzes während des Härtens der Harze verursachen und sind daher unerwünscht.

Der erfindungsgemässe kugelförmige amorphe Quarz eignet sich zur Anwendung in verschiedenen Kunststoffen, wie Epoxidharzen, phenolischen Harzen, Polyesterharzen und Polyurethanharzen. Copolymeren oder Gemischen solche Harze. Besonders eignet er sich als Füllstoff für Epoxidharze. Bevorzugt ist kugelförmiger amorpher Quarz mit einem durchschnittlichen Teilendurchmesser von 15—40 µm.

Geeignete Epoxidharze sind z. B. gegebenenfalls vorverlängerte Diglycidyläther von zweiwertigen Phenolen, wie 2,2-Bis-(4-hydroxyphenyl) propan (Bisphenol A), 2,2-Bis(3,5-dibrom-4-hydroxyphenyl)-propan (Tetrabrom-Bisphenol A) und Bis(4-hydroxyphenyl)methan (Bis-phenol F), von zweiwertigen aliphatischen Alkoholen mit bis zu 4 C-Atomen, wie Butan-1,4-diol, oder von Novolaken, besonders Phenol-Formaldehyd- und Kresol-Formaldehyd-Novolaken, sowie auch das N,N'-Tetraglycidyl-4,4-diaminodiphenylmethan, Epoxidharze auf der Basis von Bisphenol A und Phenol- oder Kresol-Novolak-Epoxidharze sind bevorzugt.

Die aus Harz-Zusammensetzungen mit dem erfindungsgemässen kugelförmigen amorphen Quarz erhaltenen Formkörper weisen ausgezeichnete elektrische und mechanische Eigenschaften auf. Die genannten Harz-Zusammensetzungen können daher für verschiedene Zwecke eingesetz werden, z.B. als Giess- und Pressmassen, als Klebstoffe, Werkzeugharze oder Harze in der Bautechnik und auf dem Konstruktionssektor. Die Anwendung als Giessmassen ist bevorzugt.

Bei Verwendung des erfindungsgemassen kugelförmigen amorphen Quarzes, bevorzugt von kugelförmigem amorphem Quarz mit einem durchschnittlichen Teilchendurchmeser von 15—40 µm, als

2

EP 0 136 257 B2

Hauptfullstoff für Epoxidharz-Zusammensetzungen weisen die entsprechenden Sotffgemische eine ausreichende Fliessfähigkeit auf, um bei Normaldruck oder unter Vakuum lediglich mittels Schwerkraft in Formen vergossen werden zu können. Definitionsgemässen kugelförmigen amorphen, Quarz enthaltende Harz-Zusammensetzungen zeichnen sich ferner im Vergleich zu analogen Harz-Zusammensetzungen mit bekannten kristallinen oder amorphen Quarzpulvern durch eine wesentlich erniedrigte Viskosität aus. Durch geeignete Wahl der Teilchengrösse des kugelförmigen amorphen Quarzes kann die Viskosität um bis zu 50% verringert werden. Dies gestattet die Verwendung von grösseren Füllstoffmengen zur Herstellung von Stoffzusammensetzungen mit einer vorgegebenen Viskosität.

Damit werden auch Formkörper erhalten, die einen verringerten Wärmeausdehnungskoeffizienten aufweisen, ohne dass die Verarbeitbarkeit der Harz-Zusammensetzungen beeinträchtigt wird. Die aus den erfindungsgemässen Stoffgemischen erhaltenen Produkte zeichnen sich gegenüber Harzgemischen mit Quarzpulvern als Hauptfüllstoff auch durch wesentlich verbesserte mechanische Eigenschaften, wie Biegefestigkeit, sowie gegenüber Harzgemischen mit kristallinem Quarzpulver als Hauptfüllstoff durch eine verbesserte elektrische Isolierung, niedrigere dielektrische Verlustfaktoren und Dielektrizitätskonstanten aus. Gegenüber Produkten, die aus mit Glaskügelchen, gefüllten Stoffgemischen erhalten werden, weisen sie ebenfalls verbesserte mechanische Eigenschaften auf. Schliesslich verursacht der erfindungsgemässe kugelförmige amorphe Quarz im Gegensatz zu kugelförmigem Aluminiumoxid keine Sedimentationsprobleme und ergibt homogene Produkte mit ausgezeichneten mechanischen und elektrischen Eigenschaften.

Die Menge des zu verwendenden kugelförmigen amorphen Quarzes hängt von der Art des eingesetzten Harzes und den allfällig vorhandenen weiteren Zusätzen, wie Härtern oder anderen Zusätzen, sowie der Art des herzustellenden Produkts ab. Bei Epoxidharzstoffgemischen aus Harz. Härter und weiteren Zusatzstoffen liegt die Menge an kugelförmigem amorphem Quarz vorzugsweise zwischen 20 und 80 Gewichtsprozent und insbesondere zwischen 50 und 70 Gewichtsprozent, bezogen auf das Gesamtgewicht des Stoffgemisches.

Mit einem Silankupplungsmittel behandelter kugelförmiger amorpher Quarz bewirkt bei Verwendung als Hauptfüllstoffe in Harz-Zusammensetzungen eine wesentliche Verbesserung der Feuchtigkeitsbeständigkeit der gehärteten Produkte; dadurch werden auch die mechanischen und elektrischen Eigenschaften der gehärteten Produkte unter Feuchtigkeitseinfluss beträchtlich verbessert.

Es können an sich beliebige Silankupplungsmittel, wie β-(3,4-Epoxycyclohexyl)-äthyltrimethoxysilan oder insbesondere γ-Glycidyloxy-propyl-trimethoxysilan, verwendet werden. Im allgemeinen wird das Silankupplungsmittel in einer Menge von 0,1 bis 1,0 Gewichtsteilen, bezogen auf 100 Gewichtsteile kugelförmigen amorphen Quarz, eingesetzt.

Die Behandlung des kugelförmigen amorphen Quarzes mit dem Silankupplungsmittel kann auf an sich bekannte Weise durchgeführt werden, z. B. durch Trockenmischen des Silankupplungsmittels und des kugelförmigen amorphen Quarzes oder durch Aufschlämm-Verfahren, z. B. durch Vermischen des kugelförmigen amorphen Quarzes mit einer wässrigen Lösung des Silans und Trocknen der Aufschlämmung durch Erhitzen.

Die erfindungsgemässen Harz-Zusammensetzungen enthalten den kugelförmigen amorphen Quarz als Hauptfüllstoff. Sie können jedoch auch weitere übliche Füllstoffe enthalten, wie Glasfasern, Kohlefasern, Glimmer, Graphit, Calciumcarbonat, Talk, Kaolin, kolloidales Siliciumdioxid, Matallpulver und dergleichen. Die Harz-Zusammensetzungen können ferner Härtungsmittel, Beschleuniger, Verdünner, Weichmacher, Pigmente, Entformungsmittel, Flammschutzmittel und weitere in der Kunststoffindustrie übliche Zusätze enthalten.

Der erfindungsgemässe kugelförmige amorphe Quarz kann analog den bei der Herstellung von kugelförmigen Silikaten, kugelförmigem Aluminiumoxid, kugelförmigem Chromit (Chromeisenerz) und kugelförmigem Zirkonium verwendeten Verfahren hergestellt werden, z. B. durch Flammspritzen von kristallinem Quarzpulver, dessen Teilchengrösse vorzugsweise mittels Vermahlen oder Zerstossen auf die gewünschte Grösse eingestellt wird. Geeignete Trägergase für das Flammspritzen sind Sauerstoff und Stickstoff. Zweckmässig werden bei diesem Verfahren Acetylen/Sauerstoff- und insbesondere Propan/ Sauerstoff-Flammen eingesetzt. Gemäss einer bevorzugten Ausführungsform wird der kristalline Quarz auf Temperaturen von mindestens 1900°C, vorzugsweise zwischen 2000 und 2200°C erhitzt und mittels Flammspritzen in den Ofen eingeführt. Die gebildeten Teilchen können anschliessend in einem in einem wassergekühlten Behälter angeordneten Tank eingesammelt werden.

Der durch das Flammspritzen erzielte durchschnittliche Teilchendurchmesser und die Teilchengrösse-Verteilung des kugelförmigen amorphen Quarzes sind im wesentlichen gleich wie diejenigen des als Ausgangsmaterial verwendeten kristallinen Quarzpulvers. Vorzugsweise ist der durchschnittliche Teilchendurchmesser des kristallinen Quarzpulvers etwa 2—10% höher als derjenige des daraus herzustellenden kugelförmigen amorphen Quarzes. Durch geeignetes Einstellen des Verhältnisses Propan/ Sauerstoff und der Pulverkonzentration in der Flamme (Menge Pulver/Menge Propan) kann kugelförmiger amorpher Quarz mit optimaler Kugelform hergestellt werden.

Das verwendete kristalline Quarzpulver sollte vorzugsweise von hoher Reinheit sein, d. h. nicht weniger als 99,5% $SiO_2$ enthalten.

Das genannte Flammspritzverfahren eignet sich besonders zur Herstellung der erfindungsgemässen kugelförmigen amorphen Quarzes, obwohl die Ausbeute an kugelförmigem amorphem Quarz sinkt, wenn

3

EP 0 136 257 B2

Quarz mit einer durchschnittlichen Teilchengrösse von weniger als 10 μm hergestellt werden soll. Andererseits steigt der Anteil an nicht vollständig geschmolzenen Teilchen, d.h. der Teilchen, die nicht vollständig nicht-kristallin werden, oder die nicht exakt kugelförmig sind, wenn amorpher Quarz mit einem durchschnittlichen Teilchendurchmesser von über 50 μm hergestellt werden soll.

Die vorliegende Erfindung wird in den folgenden Beispielen näher erläutert.

Herstellungsbeispiel

Kristallines Quarzpulver mit einem durchschnittlichen Teilchendurchmesser von 27 μm und einem $SiO_2$-Gehalt von nicht weniger als 99,5% (erhalten durch Zerkleinern in einer Kugelmühle) wird über einen Trichter zugeführt, mittels Sauerstoffgas transportiert und dann durch den Brenner der Flammspritzapparatur horizontal in den Ofen eingespritzt. Die Wände des Ofens werden durch Wasser gekühlt. Der kristalline Quarz schmilzt sofort in der Sauerstoff/Propan-Flamme bei einer Temperatur 2000°C. Dabei wird das Volumenfliess-Verhältnis propan : Sauerstoff bei 1 : 5 gehalten. Schliesslich wird der gebildete kugelförmige amorphe Quarz in einem wassergekühlten Behälter angeordneten Tank eingesammelt.

Der durchschnittliche Teilchendurchmesser der so erhaltenen Teilchen beträgt 25 μm. Die Untersuchung mit einem Lichtmikroskop ergibt, dass mehr als 99% der Teilchen eine perfekte Kugelform und einen hohen Durchsichtigkeitsgrad aufweisen. Das Vorliegen von nahezu perfekt geschmolzenem. d. h. amorphem, nicht-kristallinem Quarz wird durch Röntgenstrahl-Diffraktion bestätigt. Bei Verwendung von kristallinem Quarzpulver mit einem durchschnittlichen Teilchendurchmesser von 34 μm wird unter denselben Bedingungen kugelförmiger amorpher Quarz mit einem durchschnittlichen Teilchendurchmesser von 33 μm erhalten.

Zur Bestimmung der Teilchengrösse-Verteilung der Pulverpartikel (Ausgangsprodukt) und der kugelförmigen amorphen Quarzteilchen werden Siebe mit Maschenweiter von 0,149; 0,007 4 und 0,049 mm aufeinander angeordnet, wobei das Sieb mit den grössten Oeffnungen zuoberst zu liegen kommtproben von je 20 g werden auf dem obersten Sieb angeordnet. Die Teilchengrösse-Verteilung von Teilchen über 46 μm wird dadurch ermittelt, dass man die Probe mit Wasser übergiesst das auf den Sieben verbliebene Material jeweils in eine Verdampferschale transferiert und nach dem Trocknen das Gewicht des auf den verschiedenen Sieben verbliebenen Materials ermittelt. Die Teilchengrösse-Verteilung von Teilchen unter 20 μm wird mit einem automatischen Messgerat (Shimazu Automatic Particle Size Distribution Measurer, Modell RS—1000) ermittelt. Auf einer Graphik werden die kumulativen Prozentsätze der einzelnen Teilchengrössen für die Teilchengrösse-Verteilungswerte aufgetragen und zu einer Teilchengrösse-Verteilungskurve (Summenkurve) verbunden. Der Teilchendurchmesser für einen kumulativen Prozentsatz von 50 wird als durchschnittlicher Teilchendurchmesser bezeichnet.

Beispiele 1—3

Es werden Giessharz-Stoffgemische hergestellt, indem man 100 Gewichtsteile (Gew.t.) ARALDIT® CY 230 (ein formuliertes Bisphenol-A-Epoxidharz der Ciba-Geigy AG mit einem Epoxidgehalt von 4,3—4,8 Aequivalenten/kg und einer Viskosität von 1000—2000 mPa s bei 25°C), 20 Gew.t. Härter HY 956 (ein formulierter aliphatischer Polyaminhärter der Fa. Ciba-Geigy AG) und 120 Gew.t. kugelförmigen amorphen Quarz mit dem in der Tabelle 1 angegebenen durchschnittlichen Teilchendurchmesser vermischt. Die Harzsyteme werden je 10 Minuten bei einem Vakuum von weniger als 1330 Pa vermischt.

Bestimmung der Viskosität

Die Viskosität der Harzsysteme wird bei 25°C ermittelt Die Resultate sind in Tabelle 1 zusammengefasst. Die Viskositätsmessungen erfolgen mit einem B-Typ-Viskosimeter der Fa. Tokyo Keiki Ltd., Japan, bei einer Umlaufgeschwindigkeit von 20 U/min und unter Verwendung einer Spindel Nr. 2.

TABELLE 1

| Beispiel | durchschnittlicher Teilchendurch-messer des kugelförmigen amorphen Quarzes (μm) | Viskosität bei 25°C (mPa s) |
|---|---|---|
| 1 | 15,3 | 7820 |
| 2 | 25,0 | 3520 |
| 3 | 34,8 | 3850 |

Bestimmung der Biegefestigkeit

Das Harzsystem gemäss Beispiel 2 wird unter Vakuum gemischt und während 24 Std. bei 25°C und anschliessend während 8 Std. bei 60°C zu 5 Prüflingen von 60 × 10 × 4 mm ausgehärtet. Die Biegefestigkeit dieser fünf Prüflinge wird gemäss VSM Standard 77103 (VSM = Verein Schweizerischer

4

Maschinenindustrieller) mit einem Instron Universal Prüfgerät, Modell 1125, bestimmt. Die durchschnittliche Biegefestigkeit der 5 Prüflinge beträgt 93 N/mm².

## Beispiel 4

100 Gew.t. ARALDIT® GY 260 (ein Epoxidharz auf der Basis von Bisphenol A der Fa. Ciba-Geigy AG, Epoxidäquivalentgewicht 180—200 g/Aequivalent, Viskosität bei 25°C = 12000—16000 mPa s), 32 Gew.t. Härter HY 932 (ein formulierter aromatischer Polyaminhärter der Fa. Ciba-Geigy AG) und 198 Gew.t. kugelförmiger amorpher Quarz mit einem durchschnittlichen Teilchendurchmesser von 25 μm werden 10 Minuten gemischt und unter Vakuum entgast. Das Gemisch wird dann in ein senkrecht gehaltenes Rohr (Durchmesser 18 mm) gegossen und zwar bis zu einer Höhe von 140 mm vom Boden des Prüfrohres, und während 10 Stunden bei 80°C gehärtet. Nach dem Entformen des gehärteten Prüfkörpers werden aus diesem drei scheibchenförmige Prüflinge mit einer Dicke von 3 mm herausgeschnitten, und zwar ein Prüfling bei 5 mm (oberer Teil), ein Prüfling bei 70 mm (mittlerer Teil) und ein Prüfling bei 130 mm (unterer Teil), ausgehend vom oberen Rand des Prüfkörpers. Es wird das Anfangsgewicht jedes Prüflings bestimmt, und diese werden dann während 2 Studen in einem Tiegel bei 600°C gebrannt und erneut auf ihren Füllstoffgehalt geprüft. Der Unterschied an Füllstoffgehalt in jedem Prüfling wird als Sedimentationsgrad bezeichnet. Es werden folgende Füllstoffgehalte ermittelt: 59,4% für den Prüfling aus dem oberen Teil, 60,0% für den Prüfling aus dem mittleren Teil und 61,2% für den Prüfling aus dem unteren Teil. Dies bedeutet, dass mit dem Epoxidharzgemisch dieses Beispiels ein sehr homogener Giesskörper erhalten wird. Die Sedimentation ist in der Tat sehr gering, wenn man berücksichtigt, dass der Anfangsgehalt an Füllstoff 60 Gew.% beträgt.

## Beispiele 5—10

Epoxidharz, Härter und Füllstoff werden in den in der Tabelle 2 angegebenen Verhältnissen gemischt und gehärtet. Vor dem Vermischen werden die Epoxidharze, die Härter und Füllstoffe auf 80°C vorgewärmt, dann 10 Minuten gemischt, unter Vakuum entgast und zur Bestimmung der Biegefestigkeit und der elektrischen Eigenschaften in Metallformen gegossen. Dabei werden die Metallformen vor dem Giessen auf 80°C erwärmt. Die Harzsysteme werden anschliessend erneut unter Vakuum entgast und unter den in der Tabelle 2 angegebenen Bedingungen gehärtet.

### TABELLE 2

| Zusammensetzung und Härtungs-bedingungen | Mischverhältnissse (Gewichtsteile) | | | | | |
|---|---|---|---|---|---|---|
| | Bsp.5 | Bsp.6 | Bsp.7 | Bsp. 8 | Bsp. 9 | Bsp. 10 |
| ARALDIT ® GY 260[1] | 100 | 100 | — | — | — | — |
| ARALDIT® CY 225[2] | — | — | 100 | 100 | — | — |
| Diglycidylester von Hexa-hydrophthalsäureanhydrid[3] | — | — | — | — | 100 | 100 |
| Härter HY 932[4] | 32 | 32 | — | — | — | — |
| Härter HY 225[5] | — | — | 80 | 80 | — | — |
| Hexahydrophthalsäureanhydrid (Härter) | — | — | — | — | 90 | 90 |
| Beschleuniger DY 071[6] | — | — | — | — | 1 | 1 |
| kugelförmiger amorpher Quarz gemäss Beispiel 2 | 198 | — | 270 | — | 300 | — |
| kugelförmiger amorpher Quarz gemäss Beispiel 2, mit γ-Glycidyloxy-propyl-tri-methoxysilan behandelt [7] | — | 198 | — | 270 | — | 300 |
| Härtungsbedingungen: Beispiele 5 und 6: 6 Std/80°C und 5 Std./100°C; Beispiele 7 und 8: 6 Std./80°C und 10 Std..130°C; Beispiele 9 und 10: 6 Std./80°C und 10 Std./140°C. | | | | | | |

1) Epoxidharz auf der Basis von Bisphenol A, Epoxydäquivalentgewicht 180—200 g/Aequivalent, Viskosität bei 25°C = 12000—16000 mPa s.

2) formuliertes Epoxidharz auf der Basis von Bisphenol A, Epoxidäquivalentgewicht 178—196 g/Aequivalent, Viskosität bei 25°C = 10000—15000 mPa s.

3) Epoxidäquivalentgewicht 158—182 g/Aequivalent Viskosität bei 25°C = 700-1000 mPa s.

4) formulierter aromatischer Polyaminhärter.

5) formulierter Säureanhydridhärter.

6) Beschleuniger auf der Basis eines organometallischen Komplexes. 1) bis 6) sind Produkte der Ciba-Geigy AG.

7) Die Behandlung des kugelförmigen amorphen Quarzes von Beispiel 2 mit γ-Glycidyloxypropyl-trimethoxysilan wird wie folgt vorgenommen 5 g γ-Glycidyloxy-propyl-trimethoxysilan werden mit 500 g destilliertem Wasser vermischt und gut dispergiert. Zur erhaltenen Lösung gibt man unter Rühren 1 kg kugelförmigen amorphen Quarz. Der Füllstoff wird während 30 Minuten mit der Silanlösung vermischt dann in eine Form aus rostfreiem Stahl eingefüllt und während 16 Std. bei 110°C getrocknet. Der nach dem Trocknen erhaltene Füllstoff wird dann in einen elektrischen Mixer eingetragen und darin zur Vermeidung des Ausflockens vor der Verwendung gemischt.

Prüfung der gehärteten Produkte

Die gemäss den Beispielen 5-10 erhaltenen gehärteten Prüfkörper werden auf Wasseraufnahme. Biegefestigkeit gemäss VSM 77103 und elektrische Eigenschaften, d. h. dielektrischen Verlustfaktor (tan δ), Dielektrizitätskonstante ε und spezifischen Durchgangswiderstand gemäss VDE 0303 (Verband Deutscher Elektrotechniker) geprüft.

Für die Prüfung der Wasseraufnahme werden Prüfkörper von 60 × 10 × 4 mm verwendet, deren Oberfläche mit Sandpapier Nr. 1000 glatt poliert wird. Die Wasseraufnahme wird als durchschnittliche Gewichtszunahme (%) von 5 Prüfkörpern nach 1, 2 und 3 Stunden in kochendem Wasser bestimmt. Für die Prüfung der Biegefestigkeit werden Prüflinge der Abmessungen 60 × 10 × 4 mm verwendet, deren Oberfläche mit Sandpapier Nr. 1000 glatt poliert wird. Die Biegefestigkeit wird an 5 Prüfkörpern bestimmt und zwar mittels eines Instron Universal Testgeräts, Modell 1125 (Anfangswerte und Werte nach 1, 2 und 3. Stunden in kochendem Wasser). Danach wird der Durchschnittswert für die 5 Prüfkörper bestimmt. Aus Tabelle 3 sind die durchschnittlichen Werte für die Wasseraufnahme und die Biegefestigkeit der gehärteten Produkte gemäss Beispielen 5—10 ersichtlich.

TABELLE 3

| Beispiel | Wasseraufnahme (%) nach Kochen in Wasser | | | Biegefestigkeit (N/mm² Anfangswerte und nach Kochen in Wasser | | | |
|---|---|---|---|---|---|---|---|
| | 1 Std. | 2 Std. | 3 Std. | Anfangswert | 1 Std. | 2 Std. | 3 Std. |
| 5 | 0,07 | 0,12 | 0,15 | 108 | 83 | 80 | 78 |
| 6 | 0,09 | 0,13 | 0,16 | 138 | 123 | 117 | 114 |
| 7 | 0,08 | 0,17 | 0,21 | 146 | 76 | 69 | 62 |
| 8 | 0,10 | 0,18 | 0,20 | 140 | 138 | 135 | 137 |
| 9 | 0,07 | 0,15 | 0,17 | 154 | 82 | 70 | 65 |
| 10 | 0,05 | 0,12 | 0,14 | 150 | 146 | 143 | 140 |

Für die Bestimmung der elektrischen Eigenschaften, d. h. des dielektrischen Verlustfaktors tan δ. der Dielektrizitätskonstante ε und des spezifischen Durchgangswiderstands werden Prüfkörper der Abmessungen 100 × 100 × 2mm verwendet, deren Oberfläche mit Sandpapier No. 1000 glatt poliert ist. Für die Beispiele 5-10 werden je 4 Prüfkörper hergestellt. Zwei davon werden für die Messung des dielektrischen Verlustfaktors tan δ und die Dielektrizitätskonstante ε und die zwei anderen für die Bestimmung des spezifischen Durchgangswiderstands verwendet. Die genannten elektrischen Eigenschaften werden an den Ausgangsprüfkörpern und an einem Prüfkörper nach einer Stunde Kochen in Wasser bestimmt. Der dielektrische Verlustfaktor tan δ und die Dielektrizitätskonstanze ε werden bei 50 Hz/25°C mit einem Typ RT—10C Dielectric Property Tester der Fa. Ando Electric Ltd., Japan, gemessen. Der spezifische Durchgangswiderstand wird bei 50 Hz/25°C mit einem Typ TR—43C Durchgangswiderstands-Messgerät der Fa. Takeda Riken Ltd., Japan, bei 500 V Gleichstrom gemessen. Aus Tabelle 4 sind die Durchschnittswerte der Prüfungen an zwei Prüfkörpern ersichtlich.

# EP 0 136 257 B2

TABELLE 4

| Beispiel | Verlustfaktor tan δ % | | Dielektrizitäts-konstante ε | | Durchgangswiderstand (ÓHm. cm) | |
|---|---|---|---|---|---|---|
| | Anfangs-wert | nach 1 Std Kochen | Anfangs-wert | nach 1 Std. Kochen | Anfangs-wert | nach 1 Std. Kochen |
| 5 | 0,32 | 0,73 | 3,89 | 4,12 | $1,21 \times 10^{16}$ | $1,01 \times 10^{16}$ |
| 6 | 0,37 | 0,56 | 3,65 | 3,75 | $1,21 \times 10^{16}$ | $6,50 \times 10^{15}$ |
| 7 | 0,34 | 3,52 | 3,56 | 4,33 | $1,52 \times 10^{16}$ | $1,05 \times 10^{16}$ |
| 8 | 0,33 | 1,67*) | 3,52 | 3,42 | $1,38 \times 10^{16}$ | $5,51 \times 10^{15}$ |
| 9 | 0,55 | 1,79 | 3,46 | 3,68 | $5,25 \times 10^{15}$ | $4,09 \times 10^{15}$ |
| 10 | 0,54 | 0,56 | 3,53 | 3,65 | $2,87 \times 10^{15}$ | $3,27 \times 10^{15}$ |

*) nach 3 Std. Kochen

## Beispiel 11

100 Gew.t. eines Kresol-Novolak-Epoxidharzes mit einem Epoxidäquivalentgewicht von 220 g/Aequivalent und einem Erweichungspunkt von 71°C, 50 Gew.t. eines Phenolnovolaks mit einem Hydroxylgruppenäquivalentgewicht von 105 (g/Aequivalent) und einem Erweichungspunkt von 70°C, 1 Gew.t. 2-Methylimidazol, 3 Gew.t. Carnauba-Wachs, 0,5 Gew.t. Russ und 350 Gew.t. des kugelförmigen amorphen Quarzes gemäss Beispiel 2 werden vermengt und auf einem auf etwa 90°C erwärmten Zweiwalzenstuhl gut vermischt. Das Gemisch wird dann in Form einer Folie aus der Apparatur entfernt, abgekühlt und zu einem feinen Granulat zerkleinert. Das so erhaltene Granulat kann als Pressmasse zur Herstellung von elektronischen Komponenten verwendet werden, z. B. mittels einer Niederdruckpresse bei einer Presstemperatur von 170—180°C und einem Druck von 600—800 N/cm².

Die Eignung der erfindungsgemässen Harz-Zusammensetzungen als Giessmassen wird wie folgt geprüft:

## Fliessfähigkeit unter Normaldruck

100 Gew.t. ARALDIT® CY 205 (ein flüssiges unmodifiziertes Epoxidharz auf der Basis von Bisphenol A der Fa. Ciba-Geigy AG, Epoxidäquivalentgewicht 182—196 g/Aequivalent, Viskosität bei 25°C = 9000—13000 mPa s). 100 Gew.t. Härter HY 905 (ein modifizierter Anhydridhärter der Fa. Ciba.Geigy AG) und 400 bzw. 350 Gew.t. kugelförmiger amorpher Quarz werden miteinander vermischt. 180 g des so erhaltenen, während einer Stunde bei 60°C in einem Umluftofen vorgewärmten Harz-Gemisches werden in einen 100 cm3 Polypropylenbecher (Durchmesser 45 mm, Höhe 75 mm), der unten ein Loch von 3 mm Durchmesser aufweist, eingefüllt. Zur Beurteilung der Fliessfähigkeit wird mittels einer Digitalwaage die Zeit ermittelt, die benötigt wird, bis 30 g Harzgemisch nach dem Durchfliessen der ersten 10 g Harzgemisch durch das Loch im Becher austreten. Es werden die folgenden Werte ermittelt:

| | Zeit für das Durch-fliessen von 30 g Harzgemisch | Viskosität bei 25°C |
|---|---|---|
| mit 400 Gew.t. Quarz gemäss Beispiel 2 | 246 Sekunden | 25000mPa s |
| mit 350 Gew.t. Quarz gemäss Beispiel 2 | 131 Sekunden | 18100 mPa s. |

## Entgasungseigenschaften

250 g eines Harzgemisches aus 100 Gew.t. ARALDIT® CY 205, 100 Gew.t. Härter HY 905 und 350 Gew.t. kugelförmigen amorphem Quarz gemäss Beispiel 2 bzw. 350 Gew.t. silan-behandeltem Quarz gemäss Beispiel 6 werden in einen Zinnbehälter (Durchmesser 73 mm, Höhe 350 mm) eingefüllt und während einer Stunde bei 60°C in einem Umluftofen vorgewärmt. Anschliessend wird das Harzgemisch aus dem Behälter entfernf und in einem Vakuumtank bei 22°C unter Vakuum entgast.

Durch Druckverminderung steigt die Oberfläche des Harzgemisches an und senkt sich dann wieder

7

beim Entgasen. Es werden die für das Entgasen benötigte Zeit, d. h. vom Beginn der Druckverminderung im Tank bis zu dem Moment, bei dem sich die angestiegene Oberfläche des Harzgemisches durch Entgasan wieder senkt, und der Höhenunterschied (Anstieg) der Harzoberfläche zwischen Durckverminderung und Entgasen bestimmt. Die Viskosität der Prüfkörper wird wie in den Beispielen 1—3 beschrieben gemessen. Es werden die folgenden Werte ermittelt:

| | Entgasungs-zeit (Sek.) | Anstieg der Harz-oberfläche (cm) | Viskosität bei 25°C mPa s |
|---|---|---|---|
| mit Quarz gemäss Beispiel 2 | 432 | 17,5 | 18080 |
| mit silan-behandel-tem Quarz gemäss Beispiel 6 | 292 | 13,0 | 29600. |

Die erfindungsgemässen Harzgemische zeichnen sich somit durch gute Fliessfähigkeit und gute Enfgasungseigenschaften aus. Dank der guten Fliessfähigkeit eignen sich die erfindungsgemässen Harz-Zusammensetzungen besonders gut zur Verwendung als leicht zu verarbeitende Giessmassen. Es ist ferner überraschend, dass das Harzgemisch mit silan-behandeltem Quarz gegenüber dem Harzgemisch mit unbehandeltem kugelförmigem amorphem Quarz trotz höherer Viskosität noch wesentlich verbesserte Entgasungseigenschaften (kürzere Entgasungzeit) aufweist.

**Patentansprüche**

1. Durch Flammspritzen herstellbarer Rugelförmiger amorpher Quarz mit einem durchschnittlichen Teilchendurchmesser von 10—50 µm und einer Teilchengrösse-Verteilung von 1—100 µm Durchmesser.

2. Kugelförmiger amorpher Quarz nach Anspruch 1 dadurch gekennzeichnet, dass dessen Oberfläche mit einem Silankupplungsmittel behandelt ist.

3. Kugelförmiger amorpher Quarz nach Anspruch 1 oder 2, mit einem durchshchittlichen Teilchendurchmesser von 15—40 µm.

4. Kugelförmiger amorpher Quarz nach Anspruch 2, worin das Silankupplungsmittel β-(3,4-Epoxycyclohexyl)-äthyl-trimethoxysilan oder insebesondere γ-Glycidyloxy-propyltrimethoxysilan ist.

5. Füllstoff für Harze. enthaltend kugelförmigen amorphen Quarz.

6. Füllstoff nach Anspruch 5, worin die Oberfläche des kugelförmigen amorphen Quarzes mit einem Silankupplungsmittel benandelt ist.

7. Füllstoff nach Anspruch 5 oder 6, worin der kugelförmige amorphe Quarz einen durchschnittlichen Teilchendurchmesser von 15—40 µm aufweist.

8. Füllstoff nach Anspruch 6 worin das Silakupplungsmittel β-(3,4-Epoxycylohexyl)-athyl-trimethoxysilan oder insebondere γ-Glycidyloxy-propyl-trimethoxysilan ist.

9. Harz-Zusammensetzung, die als hauptsächlichen Füllstof kugelförmigen amorphen Quarz gemäß Anspruch 1.

10. Harz-Zusammensetzung nach Anspruch 9, worin die Oberfläche kugelförmigen amorphen Quarzes mit einem Silankupplungsmittel behandelt ist.

11. Harz-Zusammensetzung nach Anspruch 9 oder 10, worin der kugelförmigen amorphe Quarz einen durchschittlichen Teilchendurchmesser von 15—40 µm aufweist.

12. Harz-Zusammensetzung nach Anspruch 10, worin das Silankupplungsmittel β-(3,4-Epoxycyclohexyl)-athyl-trimethoxysilan oder insbesondere γ-Glycidyloxy-propyl-trimethoxysilan ist.

13. Harz-Zusammensetzung nach einem der Ansprüche 9—12, worin das Harz ein Epoxidharz ist.

14. Verwendung von Harz-Zusammensetzungen nach einem der Ansprüche 9—13 Giessmassen.

**Revendications**

1. Quartz amorphe sphérique préparé par pulvérisation à la flamme, ayant un diamètre particulaire moyen de 10 à 50 µm et des grosseurs de particules se répartissant en diamètres entre 1 et 100 µm.

2. Quartz amorphe sphérique selon la revendication 1, caractérisé en ce que sa surface est traitée par un agent silanique de couplage.

3. Quartz amorphe sphérique selon la revendication 1 ou 2, présentant un diamètre particulaire moyen allant de 15 à 40 µm.

4. Quartz amorphe sphérique selon la revendication 2, dans lequel l'agent silanique de couplage est le β-(époxy-3,4 cyclohexyl)-éthyl-triméthoxysilane, en particulier le γ-glycidyloxypropyltriméthoxysilane.

5. Charge pour des résines, contenant du quartz amorphe sphérique ayant un diamètre particulaire moyen de 10 à 50 μm et présentant une répartition des grosseurs de particules correspondant à un diamètre de 1 à 100 μm.

6. Charge selon la revendication 5, dans laquelle la surface du quartz amorphe sphérique est traitée par un agent silanique de couplage.

7. Charge selon la revendication 5 ou 6, dans laquelle le quartz amorphe sphérique présente un diamètre particulaire moyen de 15 à 40 μm.

8. Charge selon la revendication 6, dans laquelle l'agent silanique de couplage est le β-(époxy-3,4-cyclohexyl)-éthyltriméthoxysilane ou en particulier le γ-glycidyloxy-propyl-triméthoxysilane.

9. Ccmposition de résine, qui contient comme charge principale du quartz amorphe sphérique ayant un diemètre particulaire moyen de 10 à 50 μm et une répartition de la grosseur des particules correspondant à un diamètre de 1 à 100 μm.

10. Composition de résine selon la revendication 9, dans laquelle la surface du quartz amorphe sphérique est traitée par un agent silanique de couplage.

11. Composition de résine selon la revendication 9 ou 10, dans laquelle le quartz amorphe sphérique présente un diamètre particulaire moyen de 15 à 40 μm.

12. Composition de résine selon la revendication 10, dans laquelle l'agent silanique de couplage est le β-(époxy-3,4-cyclohexyl)-éthyl-triméthoxysilane ou en particulier le γ-glycidyloxy-propyl-triméthoxysilane.

13. Composition de résine selon l'une des revendications 9 à 12, dans laquelle la résine est une résine époxyde.

14. Application de compositions de résines selon l'une quelconque des revendications 9 à 13 comme matières à couler.

**Claims**

1. Spherical fused silica prepared by flame spraying and having an average particle diameter of 10-50 μm and a particle size distribution of 1—100 μm in diameter.

2. Spherical fused silica as claimed in claim 1 which is characterized in that its surface is treated with a silane coupling agent.

3. Spherical fused silica as claimed in claim 1 or 2 with an average particle diameter of 15 to 40 μm.

4. Spherical fused silica as claimed in claim 2 wherein the silane coupling agent is β-(3,4-epoxycyclohexyl)-ethyl-trimethoxysilane or in particular γ-glycidyloxy-propyl-trimethoxysilane.

5. Filler for resins, containing spherical fused silica with an average particle diameter of 10 to 50 μm and a particle size distribution of 1 to 100 μm in diameter.

6. Filler as claimed in claim 5 wherein the surface of the spherical fused silica is treated with a silane coupling agent.

7. Filler as claimed in claim 5 or 6 wherein the spherical fused silica has an average particle diameter of 15 to 40 μm.

8. Filler as claimed in claim 6 wherein the silane coupling agent is β-(3,4-epoxycyclohexyl)-ethyl-trimethoxysilane or in particular γ-glycidyloxy-propyl-trimethoxysilane.

9. Resin composition containing as the major filler spherical fused silica with an average particle diameter of 10 to 50 μm and having a particle size distribution of 1 to 100 μm in diameter.

10. Resin composition as claimed in claim 9 wherein the surface of the spherical fused silica is treated with a silane coupling agent.

11. Resin composition as claimed in claim 9 or 10 wherein the spherical fused silica has an average particle diameter of 15 to 40 μm.

12. Resin composition as claimed in claim 10 wherein the silane coupling agent is β-(3,4-epoxycyclohexyl)-ethyltrimethoxysilane or in particular γ-glycidyloxy-propyltrimethoxysilane.

13. Resin composition as claimed in any one of claims 9 to 12 wherein the resin is an epoxy resin.

14. Use of resin compositions as claimed in any one of claims 9 to 13 as casting materials.